# EUROPÄISCHE PATENTANMELDUNG

(11) **EP 2 168 436 A1**
(43) Veröffentlichungstag der Anmeldung: **31.03.2010**
(21) Anmeldenummer: 09151630.2
(22) Anmeldetag: 29.01.2009
(51) Int. Cl.: A21C 11/16

(54) **Spätzlepresse und Behältnis mit Spätzleteig**

(30) Priorität: 26.09.2008 DE 202008008851 U
(71) Anmelder: Streit, Horst, 93309 Kelheim (DE)
(72) Erfinder: Streit, Horst, 93309 Kelheim (DE)
(74) Vertreter: Reichert, Werner Franz

(57) **Zusammenfassung**

Es ist eine Spätzlepresse (2) und ein Behältnis (20) für Spätzleteig offenbart. Ein Element (4) ist vorgesehen, das mehrere Öffnungen (6) ausgebildet hat. Mit dem Element (4) ist eine umlaufende Wandung (8) verbunden, die zur Aufnahme eines Teigmaterials (10) für die herzustellenden Spätzle (12) ausgebildet ist. Das Element (4) ist mit einer lösbaren Abdeckung (14) versehen, die ein ungewolltes Austreten des Teigmaterials verhindert.

## Beschreibung

Die vorliegende Erfindung betrifft eine Spätzlepresse. Mit der Spätzlepresse ist es möglich Teigmaterial in einen Topf mit kochendem Wasser zu pressen, so dass die gewünschten Spätzle entstehen. Die Spätzlepresse kann aus einem derartigen Material geformt sein, dass die Spätzlepresse nach deren Gebrauch entsorgt werden kann.

Ferner betrifft die Erfindung ein Behältnis für Spätzleteig. Das Behältnis besteht aus einem Element, das mit einer umlaufenden Wandung verbunden ist. Gegenüber dem Element ist ein Abschluss angeordnet, der ebenfalls mit der umlaufenden Wandung verbunden ist.

Aus der DE 20 2006 004 723 U1 ist eine Nudelpresse, insbesondere zur Herstellung von Spätzle, mit einem Teigaufnahmebehälter und mit einem im Teigaufnahmebehälter führbaren Pressstempel bekannt. Die Nudelpresse kennzeichnet sich durch einen in den Teigaufnahmebehälter einsetzbaren Teigwechselbehälter, in dem der Pressstempel teigdicht führbar ist. Zudem ist der im Pressstempel vorhandene Boden mit Öffnungen versehen, durch die der Teig aus dem Teigwechselbehälter pressbar ist.

Die DE 80 02 866 U1 offenbart eine Spätzlepresse mit einem zylindrischen Teigaufnahmebehälter, der unten durch eine Lochscheibe abgeschlossen ist und der einen hebelförmigen Handgriff aufweist. Der zylindrische Teigaufnahmebehälter ist am oberen Rand mit einem angelenkten Presshebel und mit einem an dem Presshebel angelenkten, in dem Teigaufnahmebehälter verschiebbaren Kolben ausgestaltet. Die Spätzlepresse zeichnet sich dadurch aus, dass die Lochscheibe lösbar am Teigaufnahmebehälter befestigt ist.

Die DE 83 03 832 U1 beschreibt ein Gerät zum Herstellen schwäbischer Spätzle in Form einer Presse, eines Hobels, einer Mühle oder in anderer Form. Dieses Gerät kennzeichnet sich dadurch, dass die Lochplatte, durch die der Spätzleteig gedrückt wird. Diese Öffnungen besitzen verschiedene Formen und/oder Kombinationen der verschiedenen Formen. Dabei werden diese Öffnungsformen in einer Lochplatte einheitlich oder vermischt verwendet.

Aufgabe der Erfindung ist, eine Spätzlepresse zur Verfügung zu stellen, mit der es möglich ist, auf einfache und kostengünstige Weise Spätzle aus einem Teigmaterial herzustellen.

Die obige Aufgabe wird durch eine Spätzlepresse gelöst, die die Merkmale des Schutzanspruchs 1 umfasst.

Eine weitere Aufgabe der Erfindung ist, ein Behältnis für Spätzleteig bereitzustellen, das einen sicheren Transport und eine einfache Verarbeitung des Spätzleteigs gewährleistet.

Ferner wird die obige Aufgabe durch eine Spätzlepresse gelöst, die die Merkmale des Schutzanspruchs 11 umfasst.

Die erfindungsgemäße Spätzlepresse sieht ein Element vor, das mehrere Öffnungen aufweist. Das Element ist dabei mit einer umlaufenden Wandung verbunden, die zur Aufnahme eines Teigmaterials für die herzustellenden Spätzle ausgebildet ist. Bei der Einwegspätzlepresse ist das für die Herstellung der Spätzle bereits vorgefertigte Teigmaterial in der mit dem Element verbundenen umlaufenden Wandung vorhanden. Das Teigmaterial könnte hier vorteilhafterweise in einem allseitig geschlossenen Tetra Pak aufbewahrt sein. Das Material des Tetra Paks ist dabei lichtdicht ausgebildet, um eine Lichtschädigung des Teigmaterials zu verhindern. Vorteilhafterweise besteht die umlaufende Wandung aus dem Tetra Pak - Material oder einem anderen leicht deformierbaren Material, wie zum Beispiel einer lichtdichten Kunststofffolie.

Das Element ist zudem mit einer lösbaren Abdeckung versehen. Bei Verarbeitung der Spätzle wird die lösbare Abdeckung des Elements einfach abgenommen, so dass das beispielsweise in einem Tetra Pak aufbewahrte Teigmaterial durch Deformation des Tetra Paks anschließend zu spätzleförmigen Einzelsträngen gepresst wird. Zwei weitere Vorteile dieser erfindungsgemäßen Spätzlepresse bestehen zum einen darin, dass der Tetra Pak nach Benutzung einfach zu entsorgen ist und eine mühsame Reinigung, wie es bei einer handelsüblichen Spätzlepresse notwendig ist, gänzlich entfällt. Zum anderen lassen sich durch die Nutzung eines Tetra Paks Gewicht und Kraftaufwand sparen.

Das Element der erfindungsgemäßen Spätzlepresse ist mit einer Vielzahl von Öffnungen versehen, die gleichmäßig verteilt sind. Die gleichmäßige Verteilung der Öffnungen soll dabei die Gefahr eines möglichen Verklebens der einzelnen Spätzle untereinander verringern. Vorteilhafterweise sollte sich der Abstand der auf dem Element gleichmäßig verteilten Öffnungen auf ca. 1,5 bis 2,0 cm belaufen.

Eine Ausführungsvariante der erfindungsgemäßen Spätzlepresse sieht vor, dass die Öffnungen jeweils einen Querschnitt aufweisen, der gleich groß ist. Dies hat den Vorteil, dass die nach Durchpressung des Teigmaterials hergestellten Spätzle in annähernd gleicher Form ausgebildet sind.

Bei einer weiteren Ausführungsvariante der erfindungsgemäßen Spätzlepresse ist das Element mit Öffnungen versehen, die eine unterschiedliche Querschnittsform und Querschnittsgröße aufweisen. Hierbei sind für die Öffnungen eine Vielzahl an verschiedenen Varianten bezüglich Querschnittsform und Querschnittsgröße denkbar. Diese Öffnungen können beispielsweise oval, unregelmäßig länglich, dreieckig, länglich viereckig oder auch sternförmig ausgestaltet sein. Diese Ausgestaltungen haben den Vorteil, dass die unterschiedlichen Querschnittsformen und Querschnittsgrößen der Öffnungen den traditionell handgeschabten Spätzle sehr nahe kommen. Die Anzahl und Form der Öffnungen richtet sich dabei nach der jeweiligen Größe des Elements und orientiert sich an der Vielfalt der handgeschabten Spätzle.

Bei der erfindungsgemäßen Spätzlepresse ist das Element vorteilhafterweise aus einem formstabilen Material oder derart verstärkt, dass eine Deformation des Elements bei der Deformation der Wandung auszuschließen ist. Das formstabile Material lässt sich beispielsweise mit einem Kunststoff realisieren, der sich im Wesentlichen als lebensmittelverträglich zeigt. Hierbei bietet sich beispielsweise ein handelsüblicher Tetra Pak an, wie er zum Beispiel bei der Getränkeverpackung von Milch verwendet wird.

Die erfindungsgemäße Spätzlepresse weist zudem eine lösbare Abdeckung auf, die zur Sicherung des Teigmaterials in der Spätzlepresse dient. Vorteilhafterweise besteht diese Abdeckung aus einer Folie, die sich schnell vom Element abziehen lässt, um mit der Herstellung der Spätzle beginnen zu können. Idealerweise verwendet man eine Folie, die sich nach nicht vollständigem Gebrauch des Teigmaterials in der Spätzlepresse wieder an den Tetra Pak bzw. das Behältnis anhaften lässt, um die restliche Teigware zu späterer Zeit zu Spätzle verarbeiten zu können. Das Behältnis kann bis zur weiteren Verarbeitung im Kühlschrank aufbewahrt werden.

Die umlaufende Wandung der erfindungsgemäßen Spätzlepresse bzw. des Behältnisses für Spätzleteig ist derart ausgestaltet, dass diese deformierbar ist, so dass das innerhalb der Sätzlepresse befindliche Teigmaterial durch die Öffnungen des Elements pressbar ist. Die umlaufende Wandung, beispielsweise die Wandung eines Tetra Paks wird durch Einrollen, Einknicken oder ähnlichen Vorgängen deformiert. Das Teigmaterial lässt sich durch die dafür vorgesehenen Öffnungen im Element hindurchpressen. Vorteilhafterweise lassen sich durch die Art und Weise des Deformierens, beispielsweise dem Kraftaufwand, der Geschwindigkeit oder der Zeitdauer, ebenso verschiedene Formen der Spätzle erzielen, um diese nach Durchpressung des Teigmaterials in einem Kochbehälter genussfertig zu kochen.

Das erfindungsgemäße Behältnis für Spätzleteig besteht aus einem Element, das mit einer umlaufenden Wandung verbunden ist. Gegenüber dem Element ist ein Abschluss angeordnet, der ebenfalls mit der umlaufenden Wandung verbunden ist. Das Element hat mehrere Öffnungen ausgebildet. Ferner ist das Element mit einer lösbaren Abdeckung versehen, die ein ungewolltes Austreten des Teigmaterials aus dem Behältnis verhindert.

Die umlaufende Wandung ist derart ausgestaltet, dass das Volumen des Behältnisses durch Deformation der umlaufenden Wandung verkleinerbar ist. Wie bereits bei der vorher beschriebenen Spätzlepresse offenbart, wird die Verkleinerung des Volumens dadurch erreicht, in dem man eine Verpackung, wie beispielsweise die eines Tetra Paks, einrollt oder auch einknickt, um die formgerechten Spätzle durch das Element pressen zu können. Ein Vorteil dieses Behältnisses besteht darin, dass in das allseitig schließbare Behältnis das Teigmaterial eingefüllt werden kann. Somit ist das erfindungsgemäße Behältnis sowohl für die Darbietung in Verkaufsräumen, den Transport und die Verarbeitung des Teigmaterials geeignet.

Die verschiedenen Ausgestaltungen des erfindungsgemäßen Behältnisses orientieren sich weitgehend an der zuvor beschriebenen Spätzlepresse. Auch hier wird für das Element ein formstabiles Material in Form eines Kunststoffes, insbesondere eines lebensmittelverträglichen Kunststoffes, verwendet. Auch die Anzahl von Form und Größe der Querschnitte, die im Element vorhanden sind, schließen an die bereits beschriebene Einwegspätzlepresse an.

Ebenso weist das Element des Behältnisses eine Abdeckung zur Sicherung des Teigmaterials auf. Die Abdeckung besteht auch hier aus einem Folienmaterial, das vor Benutzung des Behältnisses einfach und bequem abgezogen wird, um das in der Spätzlepresse vorhandene Teigmaterial zu Spätzlen pressen zu können. Vorteilhafterweise sollte auch hier die Folie so gestaltet sein, dass bei einer Nichtentleerung des Teigmaterials die Folie wieder so angebracht werden kann, damit das Behältnis für die nächste Verwendung aufbewahrt werden kann.

Es empfiehlt sich, das Material der Spätzlepresse bzw. das Material des Behältnisses derart auszugestalten, dass es nach der vollständigen Entleerung des Teigmaterials aus der Spätzlepresse bzw. aus dem Behältnis problemlos entsorgt werden kann.

Das Behältnis hat eine verschließbare Einfüllöffnung für das Teigmaterial ausgebildet. Durch diese Öffnung kann nach der Herstellung des Behältnisses das Behältnis mit Teigmaterial maschinell befüllt werden.

Im Folgenden sollen Ausführungsbeispiele die Erfindung und ihre Vorteile anhand der beigefügten Figuren näher erläutern. Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt.

Figur 1 zeigt eine Perspektivansicht der Spätzlepresse.

Figur 2 zeigt in einer Draufsicht das Element mit einer Aufteilung seiner Öffnungen.

Figur 3 zeigt eine Perspektivansicht eines geschlossenen Behältnisses für die Aufnahme von Teigmaterial.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Einwegspätzlepresse ausgestaltet sein könnte und stellen keine abschließende Begrenzung dar.

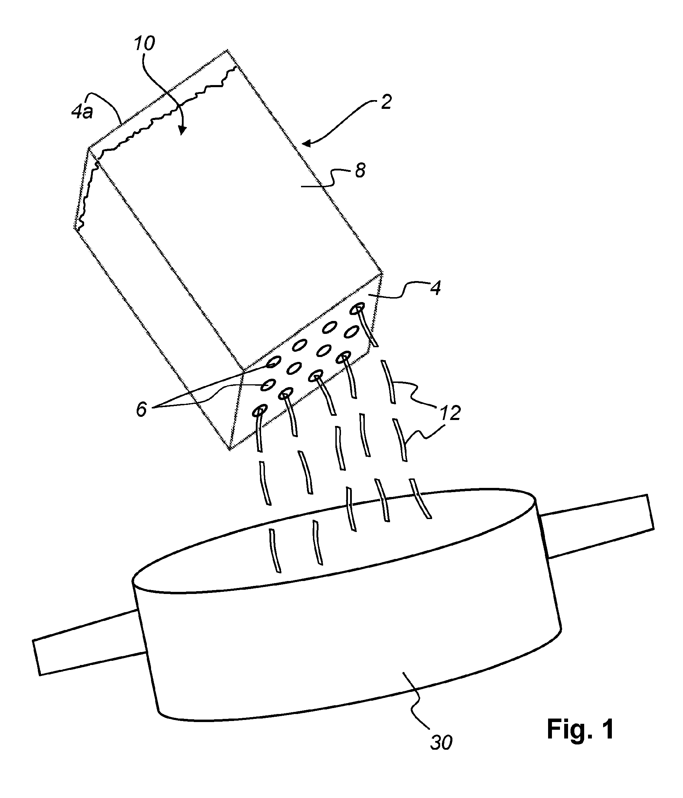

**Figur 1** zeigt in einer Perspektivansicht die Spätzlepresse 2, an der ein Element 4 angebracht ist, das mehrere Öffnungen 6 ausbildet und mit dem eine umlaufende Wandung 8 verbunden ist, die zur Aufnahme eines Teigmaterials 10 für die herzustellenden Spätzle 12 ausgebildet ist. Die Spätzlepresse 2 weist an der Unterseite das Element 4 auf, das mit den Öffnungen 6 versehen ist, durch welche das Teigmaterial 10 pressbar ist, um die Spätzle 12 herzustellen. Nach Auspressen des Teigmaterials 10 durch die Öffnungen 6 des Elements 4 gelangen die Spätzle 12 in einen dafür bereitgestellten Kochbehälter 30. Hier werden die Spätzle genussfertig zubereitet. Obwohl in der Zeichnung die umlaufende Wandung 8 eine quaderförmige Form ausbildet, soll dies nicht als Beschränkung der Erfindung aufgefasst werden. Es ist für einen Fachmann selbstverständlich, dass die umlaufende Wandung 8 eine Vielzahl von Querschnittsformen ausbilden kann. Entscheidend ist lediglich, dass die umlaufende Wandung 8 deformierbar ist, um das von ihr eingeschlossene Volumen zu verkleinern. Ebeso sollte zumindest die Wandung 8 lichtdicht ausgebildet sein. Gegenüber dem Element 4 kann die Wandung mit einem Abschluss 4a versehen sein. Dadurch entsteht eine allseitig geschlossene Spätzlepresse 2, in der das Teigmaterial sicher aufbewahrt ist.

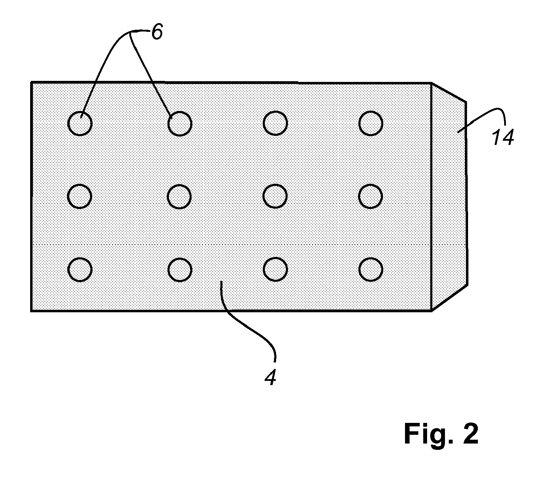

**Figur 2** zeigt in einer Draufsicht das Element 4 der Einwegspätzlepresse 2, beziehungsweise die Spätzlepresse 2, bei der das Element 4 eine Vielzahl von kreisrunden Öffnungen 6 aufweist, wobei die Öffnungen 6 über die gesamte Fläche des Elements 4 gleichmäßig aufgeteilt sind. Als sehr vorteilhaftet bietet sich jedoch an, die Öffnungen des Elements 4 verschiedenartig zu gestalten um eine Assoziation zu den handgefertigt, geschabten Spätzlen zu erlangen. Das Element 4 ist dabei mit einer Abdeckung 14 versehen, die als Folie 16 ausgestaltet ist.

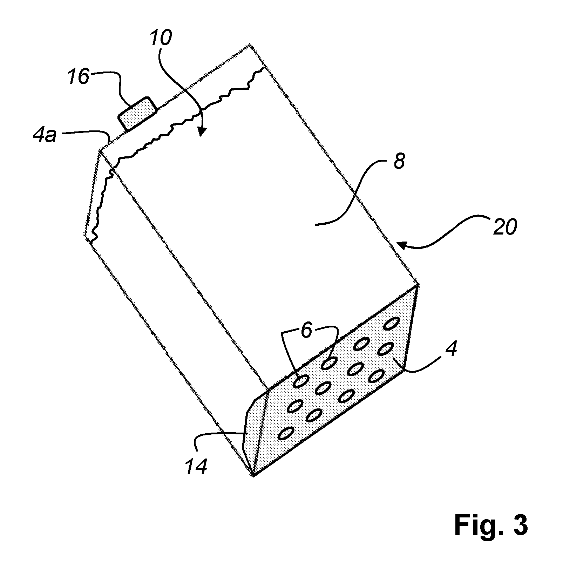

**Figur 3** zeigt eine Perspektivansicht eines Behältnisses 20 für Spätzleteig 10 bzw. Teigmaterial. Das Behältnis 20 besteht aus einem Element 4, das mit einer umlaufenden Wandung 8 verbunden ist. Gegenüber dem Element 4 ist ein Abschluss 4a angeordnet, der ebenfalls mit der umlaufenden Wandung 8 verbunden ist. Das Element 4 hat mehrere Öffnungen 6 ausgebildet. Das Element 4 des Behältnisses 20 ist zur Sicherung des Inhalts des Behältnisses 20 mit einer lösbaren Abdeckung 14 versehen. Dadurch wird ein ungewolltes Austreten des Teigmaterials aus dem Behältnis 20 verhindert. Das Behältnis 20 kann mit einer verschließbaren Einfüllöffnung 16 für das Teigmaterial 10 versehen sein. Durch diese Einfüllöffnung 16 kann nach der Herstellung des Behältnisses 20 das Behältnis 20 mit Teigmaterial 10 maschinell gefüllt werden.

Die Erfindung wurde unter Bezugnahme auf einzelne Ausführungsform beschrieben. Es ist jedoch für einen Fachmann vorstellbar, dass Abwandlungen oder Änderungen der Erfindung gemacht werden können, ohne dabei den Schutzbereich der nachstehenden Schutzansprüche zu verlassen. So ist es denkbar, dass die erfindungsgemäße Spätzlepresse 2 bzw. das Behältnis 20 in verschiedenen Formen ausgestaltet sein kann. Ebenso sollte die Materialwahl der Spätzlepresse 2 bzw. des Behältnisses 20 nicht als Beschränkung der Erfindung aufgefasst werden.

## Patentansprüche

1. Spätzlepresse (2) ,**dadurch gekennzeichnet, dass** ein Element (4) vorgesehen ist, das mehrere Öffnungen (6) ausgebildet hat, dass mit dem Element (4) eine umlaufende Wandung (8) verbunden ist, die zur Aufnahme eines Teigmaterials (10) für die herzustellenden Spätzle (12) ausgebildet ist, wobei das Element (4) mit einer lösbaren Abdeckung (14) versehen ist, die ein ungewolltes Austreten des Teigmaterials verhindert.

2. Spätzlepresse (2) nach Anspruch 1, **dadurch gekennzeichnet, dass** das Element (4) eine Vielzahl von Öffnungen (6) aufweist, die gleichmäßig verteilt sind.

3. Spätzlepresse (2) nach einem der Ansprüche 1 bis 2, **dadurch gekennzeichnet, dass** die Öffnungen (6) jeweils einen Querschnitt aufweisen, der gleich groß ist.

4. Spätzlepresse (2) nach einem der Ansprüche 1 bis 3, **dadurch gekennzeichnet, dass** das Element (4) Öffnungen (6) mit unterschiedlicher Querschnittsform und Querschnittsgröße aufweist.

5. Spätzlepresse (2) nach einem der Ansprüche 1 bis 4, **dadurch gekennzeichnet, dass** gegenüber dem Element (4) ein Abschluss (4a) ebenfalls mit der umlaufenden Wandung (8) verbunden ist, so dass die Spätzlepresse (2) das Teigmaterial (10) vollständig einschließt.

6. Spätzlepresse (2) nach Anspruch 5, **dadurch gekennzeichnet, dass** das Element (4) und die Wandung (8) und der Abschluss (4a) aus dem gleichen Material hergestellt sind.

7. Spätzlepresse (2) nach einem der Ansprüche 1 bis 5, **dadurch gekennzeichnet, dass** das Element (4) aus einem formstabilen Material besteht.

8. Spätzlepresse (2) nach Anspruch 7, **dadurch gekennzeichnet, dass** das formstabile Material Kunststoff ist.

9. Spätzlepresse (2) nach einem der Ansprüche 1 bis 7, **dadurch gekennzeichnet, dass** die lösbare Abdeckung (14) zur Sicherung des Teigmaterials (10) in der Einwegspätzlepresse (2) eine Folie (16) ist.

10. Spätzlepresse (2) nach einem der Ansprüche 1 bis 8, **dadurch gekennzeichnet, dass** zumindest die umlaufende Wandung (8) deformierbar ist, damit das innerhalb der Spätzlepresse (2) vorgesehene Teigmaterial (10) durch die Öffnungen (6) des Elements (4) pressbar ist.

11. Behältnis (20) für Spätzleteig (10), das aus einem Element (4) besteht, das mit einer umlaufenden Wandung (8) verbunden ist und dass gegenüber dem Element (4) ein Abschluss (4a) angeordnet ist, der ebenfalls mit der umlaufenden Wandung (8) verbunden ist, **dadurch gekennzeichnet, dass** das Element (4) mehrere Öffnungen (6) ausgebildet hat und dass das Element (4) mit einer lösbaren Abdeckung (14) versehen ist, die ein ungewolltes Austreten des Teigmaterials aus dem Behältnis (20) verhindert.

12. Behältnis nach Anspruch 11, **dadurch gekennzeichnet, dass** das Element (4) und die Wandung (8) und der Abschluss (4a) aus dem gleichen Material hergestellt sind.

13. Behältnis (20) nach einem der Ansprüche 11 und 12, **dadurch gekennzeichnet, dass** zumindest die umlaufende Wandung (8) deformierbar ist, damit das innerhalb des Behältnisses befindliche Teigmaterial (10) durch die Öffnungen (6) des Elements (4) pressbar ist, nachdem die Abdeckung (14) vom Element (4) gelöst ist.

14. Behältnis (20) nach Anspruch 13, **dadurch gekennzeichnet, dass** das Element (4) ein formstabiles Material ist oder derart verstärkt ist, dass das Element (4) bei Deformation der umlaufenden Wandung (8) im Wesentlichen die Form behält.

15. Behältnis (20) nach einem der Ansprüche 11 bis 14, **dadurch gekennzeichnet, dass** das Behältnis (20) eine verschließbare Einfüllöffnung (16) für das Teigmaterial (10) ausgebildet hat, durch die nach der Herstellung des Behältnisses (20) das Behältnis (20) mit Teigmaterial (10) maschinell befüllbar ist.
